# EUROPEAN PATENT SPECIFICATION

(11) **EP 2 474 761 B1**
(45) Date of publication and mention of the grant of the patent: **26.02.2020**
(21) Application number: 10811576.7
(22) Date of filing: 19.05.2010
(51) Int. Cl.: F16J 15/24, F16K 31/06, F16J 15/3204, F16J 15/3208

(54) **CONTAMINANT SEALING DEVICE**
SCHADSTOFFABDICHTUNGSVORRICHTUNG
DISPOSITIF D ÉTANCHÉITÉ AUX AGENTS DE CONTAMINATION

(30) Priority: 31.08.2009 JP 2009201007
(43) Date of publication of application: 11.07.2012
(73) Proprietor: Eagle Industry Co., Ltd., Minato-ku Tokyo 105-8587 (JP)
(72) Inventor: TAKANO Yoshihisa, Tokyo 105-8587 (JP); FUTAKUCHI Masayuki, Tokyo 105-8587 (JP)
(74) Representative: WSL Patentanwälte Partnerschaft mbB
(86) International application number: PCT/JP2010/058417
(87) International publication number: WO 2011/024523

(56) References cited:
- WO-A1-01/84023
- GB-A- 819 082
- JP-A- 2006 049 216
- JP-A- 2007 255 697
- JP-A- 2009 008 238
- JP-U- 56 004 061
- JP-U- 56 109 452
- JP-U- 63 144 382
- JP-U- 64 036 764
- US-A- 3 027 168
- US-A- 5 433 452
- US-B1- 6 712 366

## Description

### TECHNICAL FIELD

The present invention relates to a contaminant-sealing device having a seal ring for reciprocal motion or rotation attached to one of two members disposed so as to face each other and slidably placed in intimate contact with the other member. The contaminant-sealing device according to the present invention is used as, for example, a device for sealing a reciprocating part of a solenoid valve.

### BACKGROUND ART

In the past, there have been instances where contaminants enter a narrow channel between a valve and a body of a solenoid valve, and cause an operational fault. Although a seal mechanism is sometimes provided to the narrow channel to prevent ingress of contaminants, the use of regular, conventionally known packing presents problems related to increased friction due to the fact that a focus is placed on sealing performance. Another problem is also presented in that the friction fluctuates when the pressure of a sealed fluid changes.

In order to reduce friction, an X-ring shaped like the letter "X" in cross section is used in order to reduce a sliding movement of a lip sliding part such as one shown in FIG. 9 ("first conventional technique" hereafter; refer to e.g., patent document 1) and the area of the lip sliding part is reduced. However, in order to provide a seal that resists a pressure above a certain level, the seal requires a wall thickness that is sufficient to withstand the difference in pressure without failing.

Meanwhile, there is known an invention as shown in FIG. 10 ("second conventional technique" hereafter; refer, e.g., to patent document 2), an object of which is to minimize change in friction and maintain a stable sealing performance even in an instance in which the pressure of the sealed fluid changes.

According to the second conventional technique, a side ring and a back ring are fitted in addition to a seal ring, the side ring is caused to block fluid pressure acting on the back ring even in an instance in which the pressure of the sealed fluid changes, and buckling deformation is prevented, whereby a change in friction of the seal ring is minimized. Therefore, a drawback is presented in regard to the large number of components, as well as the large space required.

International patent application WO 01/84023 A1 relates to a seal assembly of the type including a seal element retained by a seal housing, wherein one of the seal element and the seal housing is constructed from a compressible material, wherein the seal element includes a seal engagement surface and wherein the seal housing includes a housing engagement surface. At least one of the seal engagement surface and the housing engagement surface define a depression for providing an isolated gap between the seal engagement surface and the housing engagement surface.

### [Prior Art Documents]

### [Patent Document]

Patent document 1: JP-A 2006-266279
Patent document 2: JP-A 2006-112486
Patent document 3: WO 01/84023 A1

### DISCLOSURE OF THE INVENTION

### [Problems to Be Solved By the Invention]

With a view to the fact that a perfect seal is less necessary for a contaminant seal than for a fluid seal, an object of the present invention is to use a seal ring having a seal part configured so that a contact area of the seal part is reduced and the seal part will not be compromised under pressure of a sealed fluid, and thereby to provide a contamination seal device that takes up less space and that operates with less friction.

A further object of the present invention is to provide a contaminant-sealing device capable of minimizing fluctuation of friction, even when the pressure of the sealed fluid changes.

A further object of the present invention is to provide a contaminant-sealing device capable of maintaining a sealing property across the entirety of a usage temperature range.

In the present invention, a contaminant seal refers to sealing of contaminants contained in a sealed fluid, not perfect sealing against the sealed fluid.

### [Means for Resolving the Above-mentioned Problem]

In order to achieve the above-mentioned objects, a contaminant-sealing device according to a first aspect of the present invention is characterized in that, in a sealing device comprising a rotating or reciprocatingly moving seal ring fitted into an annular groove formed in one of two mutually opposed members and slidably placed in intimate contact with the other member, the seal ring has a cross-sectional shape that is quadrilateral and has a taper so that a surface of a sliding part is lower towards a high-pressure side and higher towards a low-pressure side, the seal ring being disposed so that a fluid body on the high-pressure side acts on the tapered part;
the seal ring having a side surface brought into intimate contact with an inner surface of the annular groove, a space between a bottom surface of the seal ring and the inner surface of the annular groove being filled with an elastic material.

The invention according to the first aspect makes it possible to provide a contaminant-sealing device that takes up less space and that operates with less friction.

The elastic material interposed between a bottom surface of the seal ring and the inner surface of the annular groove into which the seal ring is fitted makes it possible to provide a contaminant-sealing device capable of minimizing fluctuation of friction even when the pressure of the sealed fluid changes, and capable of maintaining a sealing property across the entirety of a usage temperature range, in addition to the effect of the first aspect.

A contaminant-sealing device according to a third aspect of the present invention is the contaminant-sealing device according to the first or second aspect, characterized in that the annular groove into which the seal ring is fitted is of a width that is 0.92 to 0.98 times the width of the seal ring.

The invention according to the third aspect makes it possible to provide a contaminant-sealing device capable of minimizing fluctuation of friction even when the pressure of the sealed fluid changes, and capable of maintaining a sealing property across the entirety of a usage temperature range, in addition to the effect of the first aspect.

A contaminant-sealing device according to a fourth aspect of the present invention is the contaminant-sealing device according to any of the first through third aspects, characterized in that an O-ring is fitted on a side surface of the seal ring, the side surface being positioned towards the high-pressure side.

The invention according to the fourth aspect makes it possible to provide a contaminant-sealing device capable of minimizing fluctuation of friction even when the pressure of the sealed fluid changes, and capable of maintaining a sealing property across the entirety of a usage temperature range, in addition to the effect of the first aspect.

A contaminant-sealing device according to a fifth aspect of the present invention is characterized in that the contaminant-sealing device according any of the first through fourth aspects is installed in a volume control valve.

The invention according to the fifth aspect makes it possible to prevent foreign matter from blocking a minuscule gap between a valve body and a valve housing without increasing the outer diameter of the volume control valve, and as a result, a large thrust force is not required from a solenoid of the volume control valve.

### [Effect of the Invention]

The present invention has the following exceptional effects.
(1) In a sealing device comprising a rotating or reciprocatingly moving seal ring attached to one of two mutually opposed members and slidably placed in intimate contact with the other member, the seal ring has a cross-sectional shape that is quadrilateral and has a taper so that a surface of a sliding part is lower towards a high-pressure side and higher towards a low-pressure side, [the seal ring] being disposed so that a fluid body on the high-pressure side acts on the tapered part, thereby making it possible to provide a contaminant-sealing device that takes up less space and that operates with less friction.
(2) An elastic material is interposed between the seal ring and an annular groove into which the seal ring is fitted, and the seal ring is supported by the elastic material, thereby making it possible to provide a contaminant-sealing device capable of minimizing fluctuation of friction even when the pressure of the sealed fluid changes, and capable of maintaining sealing property across the entirety of a usage temperature range.
(3) The width of the annular groove into which the seal ring is fitted is 0.92 to 0.98 times the width of the seal ring, thereby making it possible to provide a contaminant-sealing device capable of minimizing fluctuation of friction, even when the pressure of the sealed fluid changes, and capable of maintaining a sealing property across the entirety of a usage temperature range.
(4) An O-ring is fitted on a side surface of the seal ring, the side surface being positioned towards the high-pressure side, thereby making it possible to provide a contaminant-sealing device capable of minimizing fluctuation of friction even when the pressure of the sealed fluid changes, and capable of maintaining a sealing property across the entirety of a usage temperature range.
(5) The contaminant-sealing device according to the present invention is installed in a volume control valve, thereby making it possible to prevent foreign matter from blocking a minuscule gap between a valve body and a valve housing without increasing the outer diameter of the volume control valve, and as a result, a large thrust force is not required from a solenoid of the volume control valve.

### BRIEF DESCRIPTION OF THE DRAWINGS

FIG. 1 is a front cross-section view showing a contaminant-sealing device according to a first embodiment of the present invention;
FIG. 2 is a front cross-section view showing a main part of a contaminant-sealing device according to a second embodiment of the present invention;
FIG. 3 shows a result of a friction test performed in an instance in which the contaminant-sealing device according to the second embodiment of the present invention is used;
FIG. 4 is a front cross-section view showing a third embodiment of the present invention, in which the contaminant-sealing device according to the second embodiment is used in a volume control valve;
FIG. 5 is a front cross-section view showing a main part of a contaminant-sealing device according to a fourth embodiment of the present invention; and
FIG. 6 is a front cross-section view showing a main part of a contaminant-sealing device according to a fifth embodiment of the present invention.
FIG. 7 is a schematic diagram showing a relationship between pressure fluctuation and friction in an instance in which a side surface of a seal ring is not sealed, and an instance in which a side surface of a seal ring is sealed with an O-ring as in the contaminant-sealing device according to the fifth embodiment of the present invention;
FIG. 8 is a front cross-section view showing an instance in which the contaminant-sealing device according to the fifth embodiment of the present invention is applied to a volume control valve;

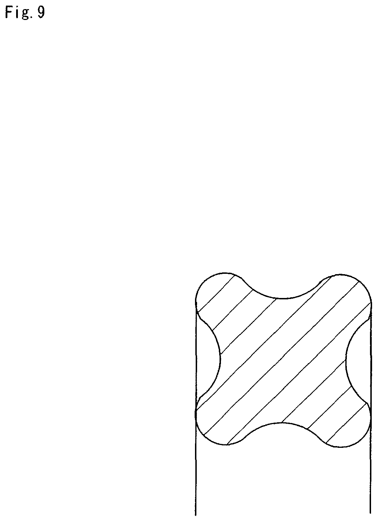

FIG. 9 is a front cross-section view showing an X-ring according to the first conventional technique; and

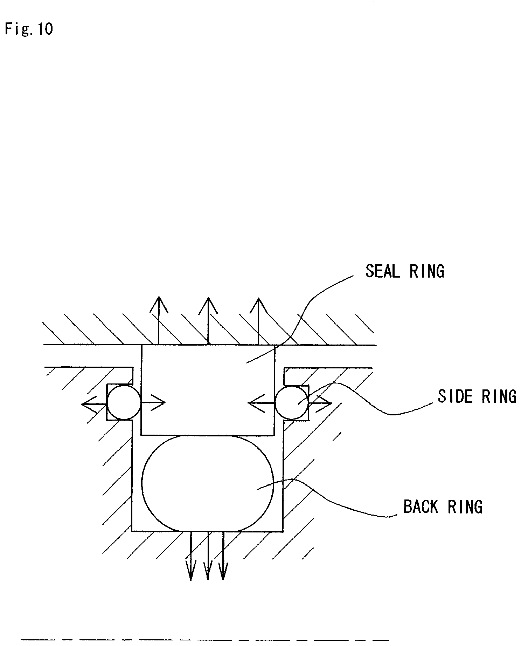

FIG. 10 is a front cross-section view showing the second conventional technique.

### MODE FOR CARRYING OUT THE INVENTION

Embodiments of a contaminant-sealing device according to the present invention will now be described in detail with reference to the drawings. However, the invention shall not be construed to be limited thereby; and may be changed, modified, or improved according to the knowledge of one skilled in the art provided that no departure is made from the scope of the present invention.

### [First embodiment]

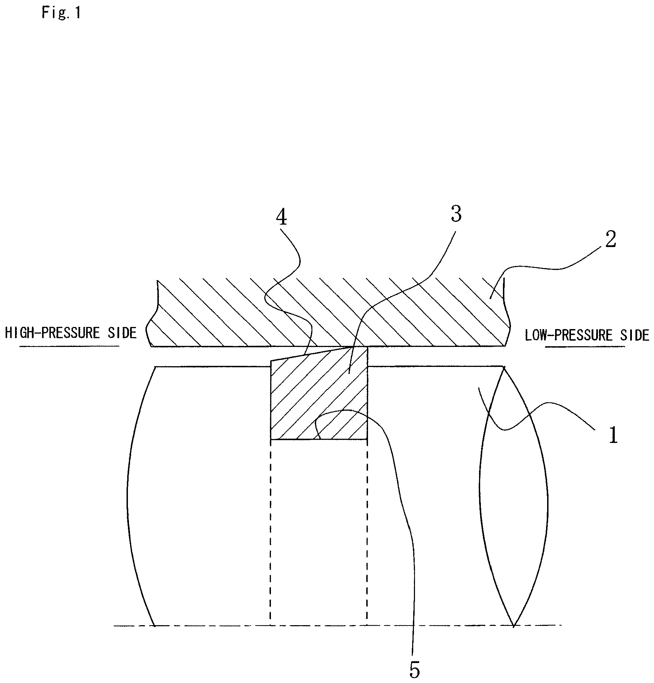

FIG. 1 is a front cross-section view showing a contaminant-sealing device according to a first embodiment of the present invention.

Of two members disposed so as to face each other, namely, a member 1 positioned on an inside and a member 2 positioned on an outside, the member 1 positioned on the inside is provided with an annular groove 5 into which a seal ring 3 is mounted. The seal ring 3 has an annular shape, has a cross-sectional shape that is quadrilateral and has a taper so that a surface of a sliding part is lower towards a high-pressure side and higher towards a low-pressure side, and is configured so that a fluid body on the high-pressure side acts on the tapered part 4. The seal ring 3 is formed from polytetrafluoroethylene (PTFE) or another material that can be used within a temperature range of -40°C to 150°C.

In an example shown in FIG. 1, an outside of the seal ring 3 forms a sliding surface, and an inside is fitted in the annular groove 5 formed in the member 1 positioned on the inside, and placed in intimate contact with an inner surface of the annular groove 5. A configuration that is opposite to that shown in FIG. 1 is also possible, so that an inside of the seal ring 3 forms a sliding surface, and an outside is fitted in an annular groove formed in a member positioned on the outside and placed in intimate contact with an inner surface of the annular groove. In either instance, the seal ring 3 is shaped so as to have a taper so that a surface of a sliding part of the seal ring 3 is lower towards a high-pressure side and higher towards a low-pressure side, and configured so that a fluid body on the high-pressure side acts on the tapered part 4.

Thus, the seal ring 3 according to the first embodiment of the present invention is configured so that a contact area of the seal part is reduced and the seal part will not be compromised under pressure of a sealed fluid, thereby making it possible to provide a contaminant seal device that takes up less space and that operates with less friction.

In the sliding part of the contaminant seal in the present invention, a seal is provided against contaminants contained in the sealed fluid (although a perfect seal against the sealed fluid is not provided); however, it shall be apparent that a perfect seal against the sealed fluid must be provided on a side surface of the seal ring 3.

### [Second embodiment]

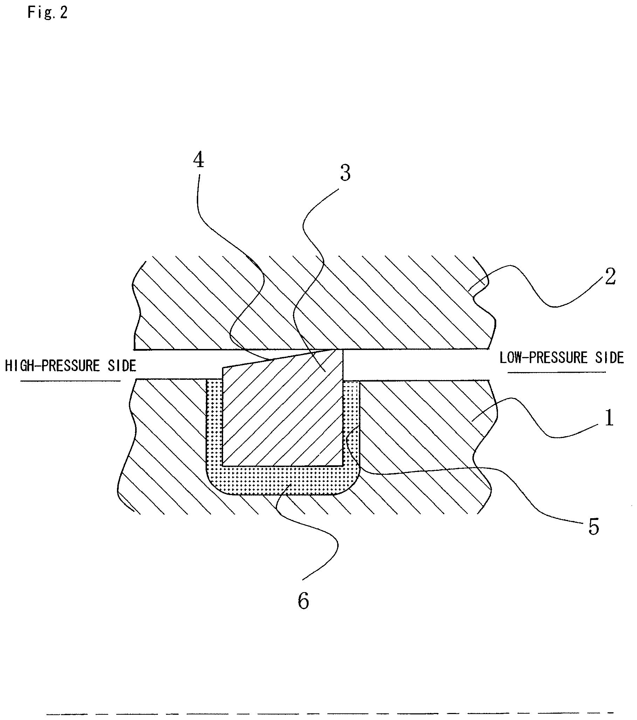

FIG. 2 is a front cross-section view showing a main part of a contaminant-sealing device according to a second embodiment of the present invention. The seal ring 3 is identical to that according to the first embodiment shown in FIG. 1, and each member that is the same as that in FIG. 1 is affixed with the same numeral.

The area between the seal ring 3 and the inner surface of the annular groove 5 accommodating the seal ring 3 is filled with an elastic material 6. A known material that exhibits elasticity within a temperature range of -40 to 150°C is used for the elastic material 6. The seal ring 3 is thus supported through the elastic material 6, and the seal ring 3 is thereby capable of being displaced in accordance with a change in pressure, even in an instance in which a sealing made of PTFE, which is relatively lacking in elasticity, is used. Therefore, it is possible to minimize changes in friction in the sliding part caused by changes in the pressure of the sealed fluid.

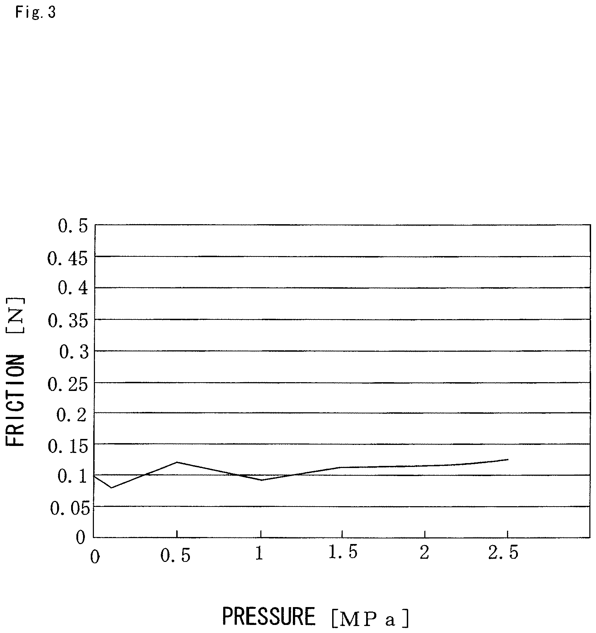

FIG. 3 shows a result of a friction test performed on the second embodiment. The test conditions are as follows: seal diameter = 4.8 mm, clearance = 0.03 mm.

As can be seen in the diagram, in an instance of the second embodiment in which the seal ring 3 is supported through the elastic material 6, even with increasing pressure of the sealed fluid, any increase in the friction in the sliding part remains very small without being proportional to the change in pressure of the sealed fluid.

### [Third embodiment]

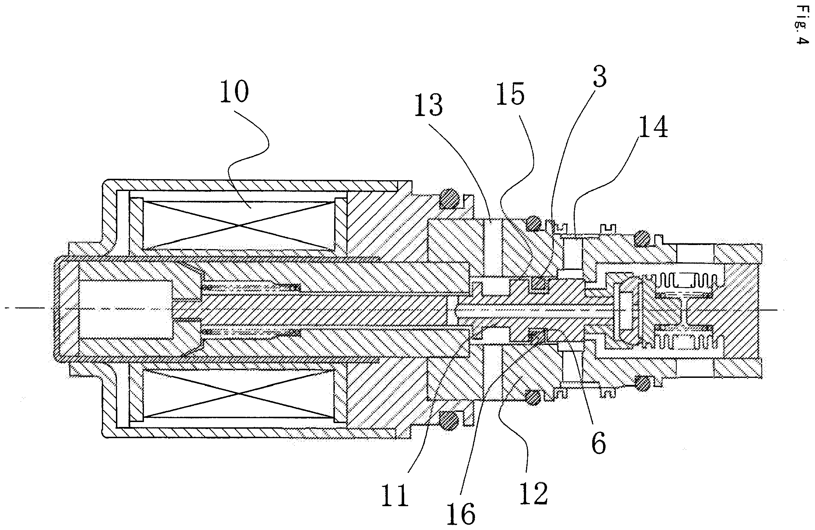

FIG. 4 is a front cross-section view showing an instance in which the contaminant-sealing device according to the second embodiment, in which the area between the seal ring 3 and the inner surface of the annular groove 5 is filled with an elastic material 6, is used in a volume control valve.

In this example, the seal ring 3 is fitted in a narrow channel 15 between a low-pressure side 13 and a high-pressure side 14, the narrow channel 15 being a space between a valve housing 12 and a valve body 11 that is reciprocatingly driven in a lateral direction by a solenoid 10, and contaminants are prevented from entering the low-pressure side 13.

The seal ring 3 is fitted in an annular groove 16 provided to the valve body 11, is shaped so as to have a taper so that a surface of a sliding part of the seal ring 3 is lower towards a high-pressure side and higher towards a low-pressure side, and configured so that a fluid body on the high-pressure side acts on the tapered part 4.

Since the contaminant-sealing device takes up less space and operates with less friction as described above, it is possible to prevent foreign matter from blocking the minuscule gap between the valve body 11 and the valve housing 12 without increasing the outer diameter of the volume control valve. As a result, a large thrust force is not required from a solenoid of the volume control valve. Also, fluctuation in friction can be minimized even when the pressure of the sealed fluid changes.

### [Fourth embodiment]

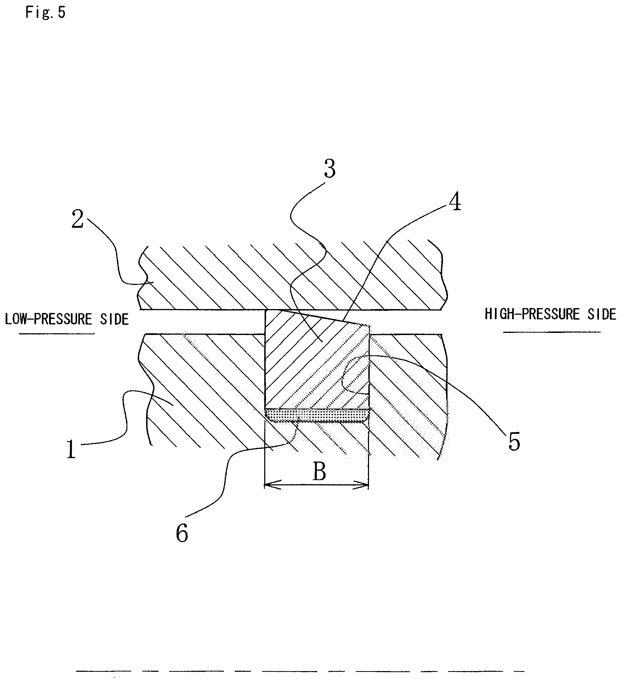

FIG. 5 is a front cross-section view showing a main part of a contaminant-sealing device according to a fourth embodiment of the present invention. The seal ring 3 is identical to that according to the first embodiment shown in FIG. 1, and each member that is the same as that in FIG. 1 is affixed with the same numeral.

In order to minimize any change in friction in the sliding part even when the pressure of the sealed fluid changes, it is necessary to improve the sealing performance of a side surface of the seal ring 3. It is also necessary to maintain the sealing performance across the entirety of a usage temperature range, or specifically, across a temperature range of -40 to 150°C.

Therefore, the width B of the annular groove 5 for accommodating and supporting the seal ring 3 is preferably between 0.92 and 0.98 times the width of the seal ring 3. Further preferably, the width B of the annular groove 5 is 0.95 times the width of the seal ring 3.

The configuration described above makes it possible to maintain the sealing performance of the side surface of the seal ring 3, even when there is a difference in thermal expansion between the seal ring 3 and a member for accommodating and supporting the seal ring 3.

Although FIG. 5 shows an instance in which the space between a bottom surface of the seal ring 3 and the inner surface of the annular groove 5 for accommodating the seal ring 3 is filled with the elastic material 6, it shall be apparent that the embodiment can also be applied to an instance in which the elastic material 6 is not present.

### [Fifth embodiment]

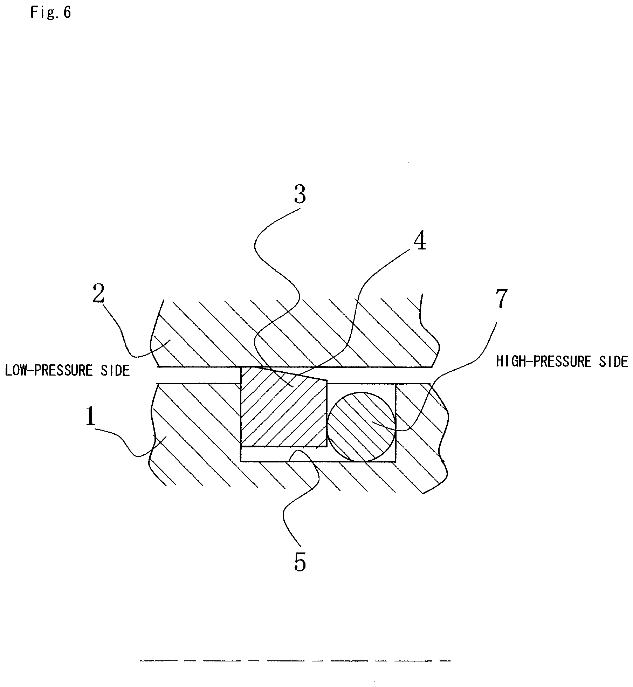

FIG. 6 is a front cross-section view showing a main part of a contaminant-sealing device according to a fifth embodiment of the present invention. The seal ring 3 is identical to that according to the first embodiment shown in FIG. 1, and each member that is the same as that in FIG. 1 is affixed with the same numeral.

In order to minimize any change in friction in the sliding part even when the pressure of the sealed fluid changes, it is necessary to improve the sealing performance of a side surface of the seal ring 3. It is also necessary to maintain the sealing performance across the entirety of a usage temperature range, or specifically, across a temperature range of -40°C to 150°C.

Therefore, an O-ring 7 is fitted between a side surface of the seal ring 3, the side surface being positioned towards the high-pressure side, and the annular groove 5 for accommodating the seal ring 3.

Fitting in the O-ring 7 as described above makes it possible to maintain the sealing performance of the side surface of the seal ring 3, even when there is a difference in thermal expansion between the seal ring 3 and a member for accommodating and supporting the seal ring 3, and makes it possible for frictional resistance of the side surface to minimize any change in friction in the sliding part even when the pressure of the sealed fluid changes.

Although FIG. 6 shows an instance in which the area between a bottom surface of the seal ring 3 and the inner surface of the annular groove 5 for accommodating the seal ring 3 is not filled with the elastic material 6, the elastic material 6 may also be present.

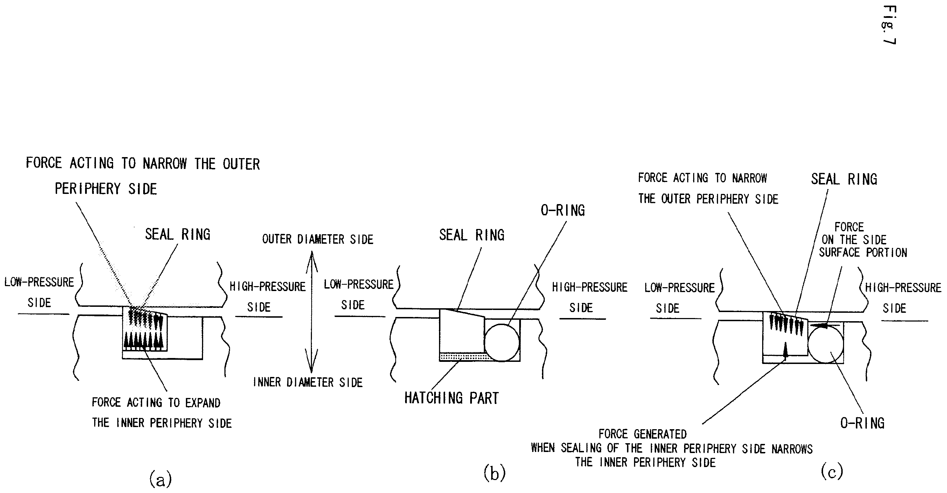

FIG. 7 is a schematic diagram showing a relationship between pressure fluctuation and friction in an instance in which a side surface of a seal ring is not sealed, and an instance in which a side surface of a seal ring 3 is sealed with an O-ring as in the contaminant-sealing device according to the fifth embodiment of the present invention.

As shown in FIG. 7(a), when the side surface of the seal ring is not sealed, not only is pressure applied to an inner periphery side of the seal ring, and a force acting to expand the inner periphery side is generated, but pressure is also applied to an outer periphery side of the seal ring, and a force acting to narrow the outer periphery side is generated. However, no pressure is applied to the sliding part of the outer periphery side, so due to a difference in the area of a surface subjected to a pressure, a force equal to a product of the surface area of the sliding part and the applied pressure is generated in the sliding part. This force is dependent on the pressure. Therefore, a change in pressure causes a change in friction in the sliding part.

In order to minimize any change in friction in the sliding part even when the pressure changes, the side surface of the seal ring 3, the side surface being positioned towards the high-pressure side, is sealed by an O-ring so that the part indicated by the hatching is not subjected to pressure, as shown in FIG. 7(b).

As shown in FIG. 7(c), in an instance in which the O-ring seals the high-pressure side of the seal ring, a force generated in a side surface portion of the seal ring narrows an inner diameter side of the seal and expands an outer diameter side, and the inner and outer diameters therefore change. However, since a pressure on the outer periphery side of the seal ring generates a force acting to narrow the outer periphery side, the force inhibits a radial displacement of the seal ring, and as a result, the force minimizes any change in friction in the sliding part with a change in the pressure of the sealed fluid.

### [Sixth embodiment]

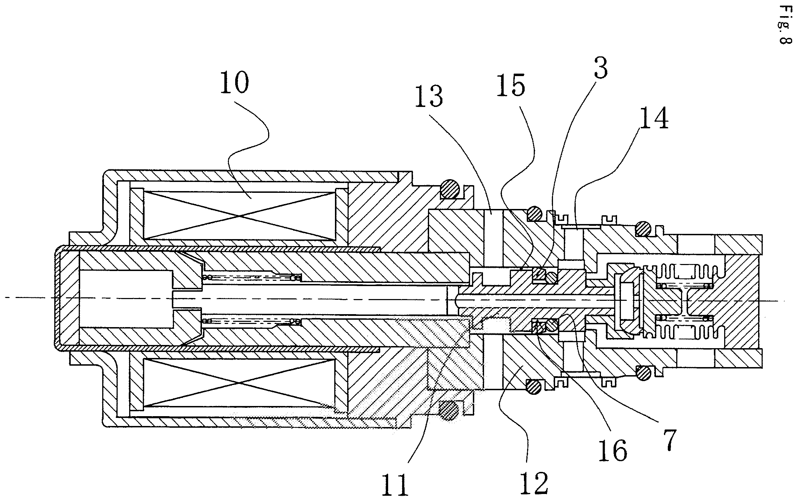

FIG. 8 is a front cross-section view showing an instance in which the sealing device according to the fifth embodiment is applied to a volume control valve.

In this example, the seal ring 3 and the O-ring 7 is fitted in a narrow channel 15 between a low-pressure side 13 and a high-pressure side 14, the narrow channel 15 being a space between a valve housing 12 and a valve body 11 that is reciprocatingly driven in a lateral direction by a solenoid 10, and contaminants are prevented from entering the low-pressure side 13.

The seal ring 3 and the O-ring 7 are fitted in an annular groove 16 provided to the valve body 11, and the seal ring 3 is shaped so as to have a taper in which a surface of a sliding part of the seal ring 3 is lower towards a high-pressure side and higher towards a low-pressure side, and configured so that a fluid body on the high-pressure side acts on the tapered part 4.

Since the contaminant-sealing device takes up less space and operates with less friction as described above, it is possible to prevent foreign matter from blocking the minuscule gap between the valve body 11 and the valve housing 12 without increasing the outer diameter of the volume control valve. As a result, a large thrust force is not required from a solenoid of the volume control valve. Also, fluctuation in friction can be minimized even when the pressure of the sealed fluid changes, and sealing performance can be maintained across the entirety of a usage temperature range, or specifically, across a temperature range of -40 to 150°C.

In the contaminant seal in the present invention, a seal is provided against contaminants contained in the sealed fluid (although a perfect seal against the sealed fluid is not provided); however, it shall be apparent that a perfect seal must be provided against the sealed fluid between the side surface of the seal ring 3 and the member for accommodating and supporting the seal ring 3.

### KEY TO DRAWINGS

- 1: Member positioned on an inside
- 2: Member positioned on an outside
- 3: Seal ring
- 4: Taper part
- 5: Annular groove
- 6: Elastic material
- 7: O-ring
- 10: Solenoid
- 11: Valve body
- 12: Valve housing
- 13: Low-pressure side
- 14: High-pressure side
- 15: Narrow channel
- 16: Annular groove
- B: Annular groove width

## Claims

1. A contaminant-sealing device, comprising a rotating or reciprocatingly moving seal ring (3) fitted into an annular groove (5) formed in one of two mutually opposed members (1, 2) and slidably placed in intimate contact with the other member, whereby the seal ring (3) has a cross-sectional shape that is quadrilateral and has a taper so that a surface of a sliding part is lower towards a high-pressure side (14) and higher towards a low-pressure side (13), the seal ring (3) being disposed so that a fluid body on the high-pressure side (14) acts on the tapered part (4),
the seal ring (3) having a sliding surface brought into intimate contact with an inner surface of the annular groove (5), **characterized in that**
a space between a bottom surface of the seal ring (3) and the inner surface of the annular groove (5) is filled with an elastic material (6).

2. The contaminant-sealing device according to Claim 1, **characterized in that** the annular groove (5) into which the seal ring (3) is fitted is of a width that is 0.92 to 0.98 times the width of the seal ring.

3. The contaminant-sealing device according to any of Claims 1 or 2, **characterized in that** an O-ring (7) is fitted on a side surface of the seal ring (3), the side surface being positioned towards the high-pressure side (14).

4. A volume control valve comprising a valve housing (12) and a valve body (11) reciprocatingly driven by a solenoid (10), **characterized in that** the volume control valve comprises a contaminant-sealing device according to any of Claims 1 through 3, wherein the seal ring (3) is fitted in a narrow channel (15) between the low-pressure side (13) and the high-pressure side (14), and wherein the narrow channel (15) is a space between the valve housing (12) and the valve body (11).

## Patentansprüche

1. Verunreinigungsdichtungsvorrichtung mit einem sich drehenden oder sich hin- und herbewegenden Dichtring (3), welcher in einer ringförmigen Nut (5) montiert ist, welche in einem von zwei sich gegenüberliegenden Elementen (1, 2) gebildet ist, und gleitend in engem Kontakt mit dem anderen Element angeordnet ist, wobei der Dichtring (3) eine Querschnittsform hat, welche viereckig ist und eine Verjüngung hat, sodass eine Fläche eines Gleitteils niedriger gegenüber einer Hochdruckseite (14) und höher gegenüber einer Niedrigdruckseite (13) ist, wobei der Dichtring (3) so angeordnet ist, dass ein Fluidkörper auf der Hochdruckseite (14) auf das verjüngte Teil (4) einwirkt,
wobei der Dichtring (3) eine Gleitfläche aufweist, welche in engen Kontakt mit einer inneren Fläche der ringförmigen Nut (5) gebracht wird, **dadurch gekennzeichnet, dass** ein Raum zwischen einer Bodenfläche des Dichtrings (3) und der inneren Fläche der ringförmigen Nut (5) mit einem elastischen Material (6) gefüllt ist.

2. Verunreinigungsdichtungsvorrichtung nach Anspruch 1, **dadurch gekennzeichnet, dass** die ringförmige Nut (5), in welche der Dichtring (3) eingepasst ist, eine Breite hat, welche 0,92- bis 0,98-mal der Breite des Dichtrings entspricht.

3. Verunreinigungsdichtungsvorrichtung nach einem der Ansprüche 1 oder 2, **dadurch gekennzeichnet, dass** ein O-Ring (7) auf einer Seitenfläche des Dichtrings (3) eingepasst ist, wobei die Seitenfläche in Richtung der Hochdruckseite (14) angeordnet ist.

4. Volumensteuerventil mit einem Ventilgehäuse (12) und einem Ventilkörper (11), welche hin- und hergehend von einem Elektromagneten (10) angetrieben werden, **dadurch gekennzeichnet, dass** das Volumensteuerventil eine Verunreinigungsdichtungsvorrichtung nach einem der Ansprüche 1 bis 3 aufweist, wobei der Dichtring (3) in einen engen Kanal (15) zwischen der Niedrigdruckseite (13) und der Hochdruckseite (14) eingepasst ist, und wobei der enge Kanal (15) ein Raum zwischen dem Ventilgehäuse (12) und dem Ventilkörper (11) ist.

## Revendications

1. Dispositif d'étanchéité aux agents de contamination, comprenant une bague d'étanchéité (3) mobile par rotation ou va-et-vient adaptée dans une rainure annulaire (5) formée dans l'un de deux éléments (1, 2) mutuellement opposés et placée pour coulisser en contact intime avec l'autre élément, dans lequel la bague d'étanchéité (3) présente en coupe une forme qui est un quadrilatère et possède un biseau tel qu'une surface de la partie coulissante est plus basse vers un côté haute pression (14) et plus haute vers un côté basse pression (13), la bague d'étanchéité (3) étant disposée de façon telle qu'un corps fluide sur le côté haute pression (14) agit sur la partie biseautée (4),
la bague d'étanchéité (3) ayant une surface coulissante amenée en contact intime avec une surface intérieure de la rainure annulaire (5),
**caractérisé en ce qu'**un espace entre une surface inférieure de la bague d'étanchéité (3) et la surface intérieure de la rainure annulaire (5) est rempli d'un matériau élastique (6).

2. Dispositif d'étanchéité aux agents de contamination selon la revendication 1, **caractérisé en ce que** la rainure annulaire (5) dans laquelle est adaptée la bague d'étanchéité (3) a une largeur qui correspond à 0,92 à 0,98 fois la largeur de la bague d'étanchéité.

3. Dispositif d'étanchéité aux agents de contamination selon l'une des revendications 1 ou 2, **caractérisé en ce qu'**un joint torique (7) est adapté sur une surface latérale de la bague d'étanchéité (3), la surface latérale étant placée vers le côté haute pression (14).

4. Soupape de régulation de débit comprenant un logement de soupape (12) et un corps de soupape (11) entraîné en va-et-vient par un solénoïde (10), **caractérisée en ce que** la soupape de régulation de débit comprend un dispositif d'étanchéité aux agents contaminants selon l'une des revendications 1 à 3, la bague d'étanchéité (3) étant adaptée dans un étroit canal (15) entre le côté basse pression (13) et le côté haute pression (14), et l'étroit canal (15) étant un espace entre le logement de soupape (12) et le corps de soupape (11).
